(19) Europäisches Patentamt
European Patent Office
Office européen des brevets

(11) **EP 4 471 372 A1**

(12) **EUROPEAN PATENT APPLICATION**

(43) Date of publication:
**04.12.2024 Bulletin 2024/49**

(21) Application number: **23188466.9**

(22) Date of filing: **28.07.2023**

(51) International Patent Classification (IPC):
**G01C 5/06** (2006.01)      **G01L 19/00** (2006.01)

(52) Cooperative Patent Classification (CPC):
**G01C 5/06; G01L 19/0092**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.04.2023   CN 202310411075**

(71) Applicant: **Beijing Xiaomi Mobile Software Co., Ltd.**
**Beijing 100085 (CN)**

(72) Inventors:
 • **SUN, Daliang**
  **Beijing, 100085 (CN)**
 • **ZHOU, Haigang**
  **Beijing, 100085 (CN)**
 • **KANG, Yanjun**
  **Beijing, 100085 (CN)**
 • **ZHANG, Yifan**
  **Beijing, 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR DETECTING MOUNTAIN CLIMBING MODE AND, GUIDANCE METHOD AND APPARATUS, DEVICE AND MEDIUM**

(57) The present application relates to a method for detecting a mountain climbing mode. The method includes: acquiring (SOI) an air pressure signal of a terminal within a preset time period; determining (S02) a plurality of air pressure values according to the air pressure signal, and calculating air pressure gradients corresponding to the plurality of air pressure values; acquiring (S03) an inertia signal of the terminal within the preset time period in response to determining that the air pressure gradients meet a preset condition; and detecting (S04) whether the terminal is in a mountain climbing mode according to the plurality of air pressure values and the inertia signal. Thus, whether the terminal is in the mountain climbing mode is detected according to the air pressure signal and the inertia signal, an effect of lowering an overall power consumption can be achieved, and a motion state of a user can be accurately recognized.

Acquire an air pressure signal of a terminal within a preset time period — S01

Determine a plurality of air pressure values according to the air pressure signal, and calculate air pressure gradients corresponding to the plurality of air pressure values — S02

Acquire an inertia signal of the terminal within the preset time period in response to determining that the air pressure gradients meet a preset condition — S03

Detect whether the terminal is in a mountain climbing mode according to the plurality of air pressure values and the inertia signal — S04

Fig. 1

EP 4 471 372 A1

## Description

### TECHNICAL FIELD

The present application relates to the field of communication, in particular to a method and an apparatus for detecting a mountain climbing mode, a guidance method and a guidance apparatus, a device, and a medium.

### BACKGROUND

At present, the position of a terminal is mostly determined through the manners such as satellite positioning to detect whether the terminal is in a mountain climbing mode. When the terminal is in a signal environment, corresponding to the mountain climbing mode, where signal propagation is limited and a signal state is poor, generally, the signal intensity of the terminal is improved by increasing a signal transmitting power of the terminal, but this manner will increase power consumption of the terminal, and the signal intensity of the terminal is hard to improve significantly.

### SUMMARY

To solve problems existing in the related art, the present application provides a method and an apparatus for detecting a mountain climbing mode, a guidance method and a guidance apparatus, a device and a medium.

According to a first aspect of examples of the present application, a method for detecting a mountain climbing mode is provided, including:

acquiring an air pressure signal of a terminal within a preset time period;
determining a plurality of air pressure values according to the air pressure signal, and calculating air pressure gradients corresponding to the plurality of air pressure values;
acquiring an inertia signal of the terminal within the preset time period in response to determining that the air pressure gradients meet a preset condition; and
detecting whether the terminal is in the mountain climbing mode according to the plurality of air pressure values and the inertia signal.

In some examples, determining the plurality of air pressure values according to the air pressure signal includes:

determining a plurality of initial air pressure values by performing filtering processing on the air pressure signal; and
determining the plurality of air pressure values by calculating an average value of a plurality of values within every N seconds in the plurality of initial air pressure values respectively, where N is a positive number.

In some examples, acquiring the inertia signal of the terminal within the preset time period in response to determining that the air pressure gradients meet the preset condition includes:

acquiring the inertia signal in response to determining that the air pressure gradients are greater than or equal to a preset first air pressure gradient threshold and less than or equal to a preset second air pressure gradient threshold, where the second air pressure gradient threshold is greater than the first air pressure gradient threshold.

In some examples, detecting whether the terminal is in the mountain climbing mode according to the plurality of air pressure values and the inertia signal includes:

obtaining an air pressure flag bit by calculating an average value of the plurality of air pressure values;
calculating a difference between the air pressure value corresponding to a latest time stamp in the plurality of air pressure values and the air pressure flag bit; and
detecting whether the terminal is in the mountain climbing mode according to the inertia signal in response to determining that the difference is greater than or equal to a preset difference threshold.

In some examples, the inertia signal includes: a linear acceleration signal and an angular acceleration signal; and

detecting whether the terminal is in the mountain climbing mode according to the inertia signal includes:
calculating a first feature value according to the linear acceleration signal and calculating a second feature value according to the angular acceleration signal; and
inputting the first feature value and the second feature value into a preset classification model, and determining whether the terminal is in the mountain climbing mode through the classification model, where the classification model is obtained by training inertia signal samples based on a predetermined algorithm in advance.

In some examples, calculating the first feature value according to the linear acceleration signal and calculating the second feature value according to the angular acceleration signal include:

calculating a first modulus of the linear acceleration signal, obtaining a first initial feature value according to the first modulus, and calculating a second modulus of the angular acceleration signal, and obtaining a second initial feature value according to the second modulus; and

obtaining the first feature value and the second feature value by processing the first initial feature value and the second initial feature value respectively through a principal component analysis algorithm.

According to a second aspect of examples of the present application, a guidance method for a terminal is provided, including:

detecting whether the terminal is in a mountain climbing mode by utilizing the method for detecting a mountain climbing mode provided by any example in the first aspect of the present application;
acquiring a signal intensity parameter corresponding to at least one attitude of the terminal in response to determining that the terminal is in the mountain climbing mode, the signal intensity parameter representing a signal intensity value between the terminal and a base station;
determining a target attitude of the terminal according to the signal intensity parameter; and
outputting guidance information with respect to an attitude parameter of the target attitude.

In some examples, acquiring the signal intensity parameter corresponding to the at least one attitude of the terminal includes:

acquiring signal intensity parameters corresponding to a plurality of attitudes of the terminal; and
determining the target attitude of the terminal according to the signal intensity parameter includes:
determining a signal intensity parameter representing a maximum signal intensity value in the signal intensity parameters corresponding to the plurality of attitudes of the terminal as a target signal intensity parameter; and
determining an attitude corresponding to the target signal intensity parameter as the target attitude.

In some examples, before acquiring the signal intensity parameter corresponding to the at least one attitude of the terminal, the method further includes:

acquiring a current signal intensity parameter of the terminal in response to determining that the terminal is in the mountain climbing mode; and outputting attitude adjusting prompt information in response to determining that the current signal intensity parameter of the terminal meets a preset condition, where the attitude adjusting prompt information is configured to indicate a user to adjust an attitude of the terminal to at least one preset attitude; and
acquiring the signal intensity parameter corresponding to the at least one attitude of the terminal includes:

acquiring a signal intensity parameter corresponding to the at least one preset attitude of the terminal.

In some examples, the attitude parameter includes: a hand-held gesture parameter; and

before outputting the attitude adjusting prompt information, the method further includes:
acquiring a target service state of the terminal;
determining a hand-held gesture parameter corresponding to the terminal under the target service state; and
determining the at least one preset attitude according to a determined hand-held gesture parameter.

In some examples, the terminal includes a plurality of receiving antennas; and

before acquiring the signal intensity parameter corresponding to the at least one attitude of the terminal, the method further includes:
controlling all the receiving antennas to be in a working state.

In some examples, the method further includes:

acquiring first position information of the terminal and second position information of a peripheral base station of the terminal; and
outputting position prompt information according to the first position information and the second position information, where the position prompt information is configured to indicate a user a position of the terminal and a position of the peripheral base station.

In some examples, the method further includes: outputting path prompt information according to the first position information and the second position information, where the path prompt information is configured to indicate the user a path between the terminal and the peripheral base station.

According to a third aspect of examples of the present application, an electronic device is provided, including:

a processor; and
a memory, configured to store processor-executable instructions; where
the processor is configured to, when executing the executable instructions, perform steps of the method provided by any example in the first aspect of the present application, or, the processor is configured to, when executing the executable instructions, perform steps of the method provided by any example in the second aspect of the present application.

According to a fourth aspect of examples of the present application, a computer readable storage medium is provided, storing computer program instructions. The program instructions, when executed by a processor, perform steps of the method provided by any example in the first aspect of the examples of the present application, or, the program instructions, when executed by the processor, perform steps of the method provided by any example in the second aspect of the examples of the present application.

The technical solutions provided by the examples of the present application may include the following beneficial effects: acquiring the air pressure signal of the terminal within the preset time period; determining the plurality of air pressure values according to the air pressure signal, and calculating the air pressure gradients corresponding to the plurality of air pressure values; acquiring the inertia signal of the terminal within the preset time period in response to determining that the air pressure gradients meet the preset condition; and detecting whether the terminal is in the mountain climbing mode according to the plurality of air pressure values and the inertia signal. Compared with the solution in the related art that the position of the terminal is determined by using the manners such as satellite positioning so as to detect whether the terminal is in the mountain climbing mode, the technical solution provided by the examples of the present application may achieve an effect of lowering an overall power consumption, and can accurately recognize a motion state of the user.

And, by acquiring the signal intensity parameter corresponding to the at least one attitude of the terminal, the target attitude of the terminal is determined according to the acquired signal intensity parameter, and the guidance information with respect to the attitude parameter of the target attitude is output to guide the user to adjust the attitude of the terminal to the target attitude. Thus, compared with the solution in the related art that the signal transmitting power of the terminal is generally increased to attempt to guarantee a connection between the terminal and the base station, in the technical solution provided by the examples of the present application, for the terminal in the mountain climbing mode, a proper attitude of the terminal under the current signal environment is obtained through terminal attitude analysis, and the signal intensity of the terminal is improved by guiding the user to adjust the attitude of the terminal so as to change the current signal state of the terminal in a targeted manner without increasing additional terminal power consumption.

It is to be understood that the above general description and following detailed description are exemplary and illustrative, and do not limit the present application.

**BRIEF DESCRIPTION OF THE DRAWINGS**

The accompanying drawings here are incorporated into the description and constitute a part of the description, show examples consistent with the present application, and together with the description, are used to explain the principle of the present application.

Fig. 1 is a flow diagram of a method for detecting a mountain climbing mode illustrated according to an example.
Fig. 2 is a flow diagram of an implementation method of step S02 in an example of the present application.
Fig. 3 is a flow diagram of an implementation method of step S03 in an example of the present application.
Fig. 4 is a flow diagram of an implementation method of step S04 in an example of the present application.
Fig. 5 is a flow diagram of an implementation method of step S043 in an example of the present application.
Fig. 6 is a flow diagram of an implementation method of step S0431 in an example of the present application.
Fig. 7 is a flow diagram of a guidance method illustrated according to an example.
Fig. 8 is a schematic diagram of a signal state of the terminal illustrated according to an example.
Fig. 9 is a schematic diagram of a relationship between a maximum power direction of an antenna and a main lobe and a side lobe of the antenna.
Fig. 10 is a schematic diagram of a coverage area corresponding to a main lobe direction of an antenna illustrated according to an example.
Fig. 11 is a flow diagram of another guidance method illustrated according to an example.
Fig. 12 is a flow diagram of an implementation method of step S2021 in an example of the present application.
Fig. 13 is a flow diagram of yet another guidance method illustrated according to an example.
Fig. 14 is a flow diagram of an implementation method of step S3002 in an example of the present application.
Fig. 15 is a flow diagram of yet another guidance method illustrated according to an example.
Fig. 16 is a flow diagram of yet another guidance method illustrated according to an example.
Fig. 17 is a flow diagram of yet another guidance method illustrated according to an example.
Fig. 18 is a schematic diagram of a guidance interface illustrated according to an example.
Fig. 19 is a schematic diagram of another guidance interface illustrated according to an example.
Fig. 20 is a block diagram of an apparatus for detecting a mountain climbing mode illustrated according to an example.
Fig. 21 is a block diagram of a guidance apparatus illustrated according to an example.
Fig. 22 is a block diagram of an electronic device illustrated according to an example.

## DETAILED DESCRIPTION

Examples will be described in detail here, and instances of the examples are shown in the accompanying drawings. When the following description refers to the accompanying drawings, unless otherwise indicated, the same numbers in different drawings indicate the same or similar elements. The implementations described in the following examples do not represent all implementations consistent with the present application. Rather, they are merely instances of apparatuses and methods consistent with some aspects of the present application as detailed in the appended claims.

It is to be noted that all actions to acquire signals, information, or data in the present application are carried out in accordance with the corresponding data protection regulations and policies of the country where they are located, and authorized by the corresponding apparatus owner.

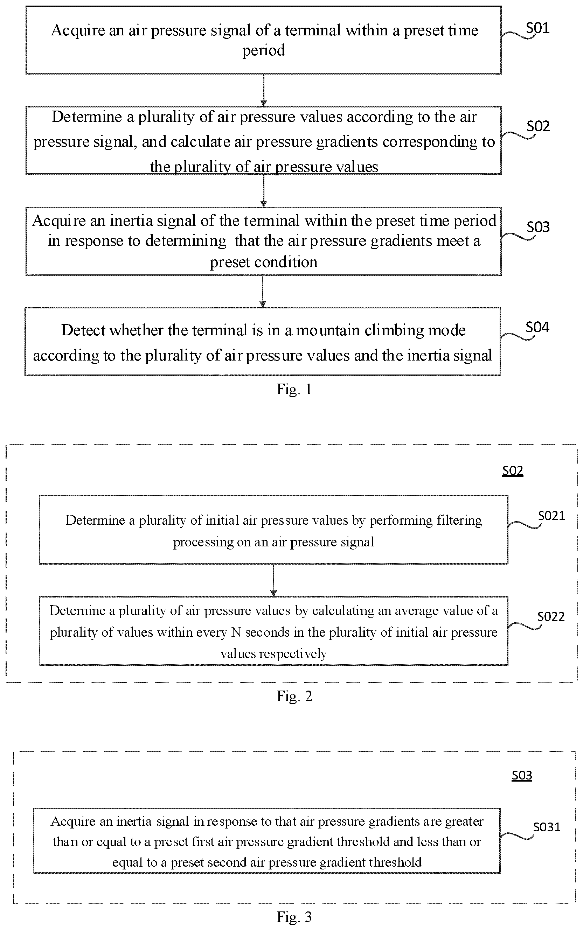

Fig. 1 is a flow diagram of a method for detecting a mountain climbing mode illustrated according to an example. In some examples, the method may be applied to a terminal. As shown in Fig. 1, the method includes the following steps: step S01, step S02, step S03 and step S04.

In step S01, an air pressure signal of the terminal within a preset time period is acquired.

In some examples, the preset time period is a period of time with a current moment as the last moment.

In some examples, air pressure parameters may be acquired based on air gauge measurement and the like. For example, an air gauge collects the air pressure signal at a preset frequency, and in some examples, the preset frequency is 20 Hz.

In some examples, due to a difference of terminal hardware devices, air gauge readings of part of terminals will fluctuate substantially, for example, when a screen is pressed, an amplitude of a sudden air pressure change will be too high, and at the moment, a duration corresponding to the preset time period may be prolonged properly to achieve an effect of preventing fluctuations.

In step S02, a plurality of air pressure values are determined according to the air pressure signal, and air pressure gradients corresponding to the plurality of air pressure values are calculated.

The air pressure gradients reflect a change of the air pressure values, and thus may indicate a change of an altitude of a user holding the terminal.

In some examples, as for a situation that the plurality of air pressure values change in an order of time stamps and don't change linearly, a minimum value and a maximum value alternately occurring in the plurality of air pressure values and values between the minimum value and the maximum value are used as one group and a time stamp is recorded, and gradients of all groups of data are calculated, where at least m values exist between the minimum value and the maximum value, and a difference between the maximum value and the minimum value is at least greater than x. m is a positive integer, for example, m=60. x may be set differently according to different terminals and air pressure signal collecting devices, for example, a small value may be adopted for a terminal of a waterproof type matching a waterproof air gauge, for instance, x=0.3 hPa, and a large value may be adopted for a terminal of a waterproof type matching a common air gauge due to louder noise and large fluctuations, for instance, x=2 hPa.

In step S03, an inertia signal of the terminal within the preset time period is acquired in response to determining that the air pressure gradients meet a preset condition.

When the air pressure gradients meet the preset condition, for example, when the air pressure gradients reflect that the change of the altitude of the user holding the terminal may accord with a mountain climbing behavior, the inertia signal of the terminal within the preset time period is acquired.

In some examples, the inertia signal may be acquired based on an inertia sensor. For example, the inertia sensor is an inertial measurement unit (IMU).

In step S04, whether the terminal is in a mountain climbing mode is detected according to the plurality of air pressure values and the inertia signal.

A motion state of the user holding the terminal is judged according to the plurality of air pressure values and the inertia signal, thus determining whether the terminal is in the mountain climbing mode. In the mountain climbing behavior of the user, a change trend of the air pressure values during mountain climbing is decreasing, and the change trend of the air pressure values during downhill is increasing. It may be determined according to inertia parameters that the terminal and the user holding the terminal are moving or keep a relative stationary state.

In some examples, an air pressure situation and a motion situation of the mountain climbing behavior corresponding to the mountain climbing mode are distinguished from an air pressure situation and a motion situation of other behaviors that will cause an altitude change, and other altitude change events are, for example, taking an elevator or an escalator, walking on stairs or an overbridge, taking a plane, going up a mountain by using an automobile and other vehicles, and using high-altitude recreational facilities. Whether the air pressure situation corresponds to the mountain climbing behavior may be determined according to the plurality of air pressure values, the motion situation of the terminal may be determined according to the inertia signal, and thus whether the terminal is in the mountain climbing mode is detected.

Thus, compared with a method in the related art that the position of a terminal is determined by utilizing technologies such as satellite positioning so as to detect the mountain climbing mode, the method for detecting a mountain climbing mode provided based on the examples of the present application may lower power consumption and is higher in detection accuracy. For example, when a sensor is adopted to acquire the air pressure signal and the inertia signal, for example, a rated current of an air gauge is about 0.2 mA, a rated current of an inertia sensor is about 1 mA. As for an approach that an environment of a terminal is determined by acquiring terrain parameters, position parameters and the like based on satellite positioning, taking an example that a global positioning system (GPS) is used as a positioning apparatus, the rated current of the GPS is above 150 mA. Thus determining whether the terminal is in the mountain climbing mode according to the air pressure signal and the inertia signal may achieve an effect of lowering the power consumption compared with using other parameters.

Fig. 2 is a flow diagram of an implementation method of step S02 in an example of the present application. As shown in Fig. 2, in step S02, determining the plurality of air pressure values according to the air pressure signal includes: step S021 and step S022.

In step S021, a plurality of initial air pressure values are determined by performing filtering processing on the air pressure signal.

The filtering processing is performed on the air pressure signal to acquire a relatively stable air pressure state of the terminal, excluding situations of severe fluctuations caused by knocking a mobile phone or colliding with other objects.

In some examples, a high-order infinite impulse response (IIR) filter is adopted to perform filtering processing on the air pressure signal.

In step S022, the plurality of air pressure values are determined by calculating an average value of a plurality of values within every N seconds in the plurality of initial air pressure values respectively.

N is a positive number, and in some examples, N=1.

Compared with the plurality of initial air pressure values, the plurality of air pressure values determined based on taking the average value of the plurality of values within every N seconds are smoother in value change, and a situation of jumping change is avoided.

Fig. 3 is a flow diagram of an implementation method of step S03 in an example of the present application. As shown in Fig. 3, step S03 that the inertia signal of the terminal within the preset time period is acquired in response to determining that the air pressure gradients meet the preset condition includes: step S031.

In step S031, the inertia signal is acquired in response to determining that the air pressure gradients are greater than or equal to a preset first air pressure gradient threshold and less than or equal to a preset second air pressure gradient threshold.

The second air pressure gradient threshold is greater than the first air pressure gradient threshold.

For example, the air pressure gradients being less than the first air pressure gradient threshold may represent that the user holding the terminal is walking on a flat ground or a ground with merely a certain slope, for instance, the first air pressure gradient threshold is equal to 0.1 hPa/s. And the air pressure gradients being greater than the second air pressure gradient threshold may represent that a motion state of the user holding the terminal exceeds a normal walking speed, for instance, the second air pressure gradient threshold is equal to 1 hPa/s, where it is possible that this situation occurs because the user is moving by taking a vehicle or other devices, such as an escalator, an elevator and a high-altitude device.

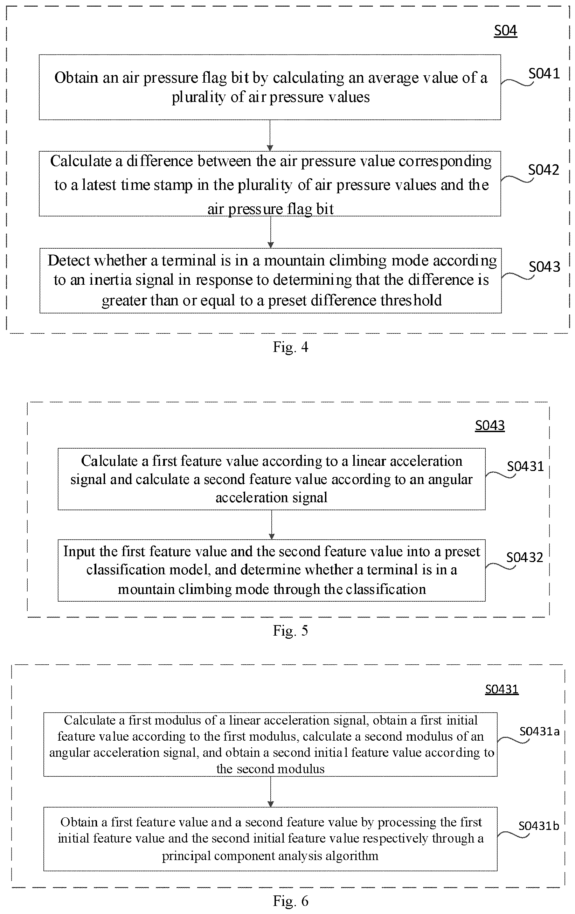

Fig. 4 is a flow diagram of an implementation method of step S04 in an example of the present application. As shown in Fig. 4, step S04 that whether the terminal is in the mountain climbing mode is detected according to the plurality of air pressure values and the inertia signal includes: step S041 to step S043.

In step S041, an air pressure flag bit is obtained by calculating an average value of the plurality of air pressure values.

The average value of the plurality of air pressure values is used as the air pressure flag bit. In some examples, a height corresponding to the air pressure flag bit is used as a ground height flag bit, which is used as a reference position for judging height change.

In step S042, a difference between the air pressure value corresponding to a latest time stamp in the plurality of air pressure values and the air pressure flag bit is calculated.

In step S043, whether the terminal is in the mountain climbing mode is detected according to the inertia signal in response to determining that the difference is greater than or equal to a preset difference threshold.

Comparing the air pressure value with the latest time stamp with the air pressure flag bit may also be understood as comparing a height corresponding to the air pressure value with the latest time stamp with the ground height flag bit corresponding to the air pressure flag bit.

In some examples, whether the terminal is in the mountain climbing mode is detected according to the inertia signal in response to determining that the difference is greater than or equal to a first difference threshold. The difference between the air pressure value with the latest time stamp and a current air pressure flag bit is continuously collected, calculated and monitored in response to determining that the difference is less than the first difference threshold and the difference is greater than or equal to a preset second difference threshold, where the first difference threshold is greater than the second difference threshold. If the difference reaches the first difference threshold within a preset short time period, whether the terminal is in the mountain climbing mode is detected according to the inertia signal. For example, an air pressure change corresponding to the first difference threshold represents an existence of height change of 60 m, and an air pressure change corresponding to the second difference threshold represents an existence of height change of 21 m. In some examples, if the difference does not reach the first difference threshold within the preset short time period, it is judged that the terminal is not in the mountain climbing mode, and it is judged that the terminal is not in the mountain climbing mode in response to determining that the difference is less than the second difference threshold.

Fig. 5 is a flow diagram of an implementation method of step S043 in an example of the present application. In some examples, the inertia signal includes a linear acceleration signal and an angular acceleration signal. As shown in Fig. 5, step S043 that whether the terminal is in the mountain climbing mode is detected according to the inertia signal in response to determining that the difference is greater than or equal to the preset difference threshold includes: step S0431 and step S0432.

In step S0431, a first feature value is calculated according to the linear acceleration signal and a second feature value is calculated according to the angular acceleration signal.

In some examples, the linear acceleration signal and the angular acceleration signal are acquired based on an inertial measurement unit, where an accelerometer of the inertial measurement unit may collect the linear acceleration signal, and a gyroscope of the inertial measurement unit may collect the angular acceleration signal.

In step S0432, the first feature value and the second feature value are input into a preset classification model, and whether the terminal is in the mountain climbing mode is determined through the classification model.

The classification model is obtained by training inertia signal samples based on a predetermined algorithm in advance, and the classification model is utilized to distinguish the mountain climbing behavior of the user from a similar stair climbing behavior and the like.

In some examples, the classification model is a logistic regression model.

In some examples, before step S0431 that the first feature value is calculated according to the linear acceleration signal and the second feature value is calculated according to the angular acceleration signal, the motion state of the user holding the terminal may be judged according to the inertia signal. For example, whether the user holding the terminal is walking is determined using a preset pedometer algorithm, where the preset time period is segmented, for instance, a period of time of 2 min is segmented with 10 s as an interval. If it is determined that a proportion of a section where the user is in a walking state to a total section is greater than or equal to y, for instance, y=0.5, and a number of total steps is not lower than z, for instance, z=50, it is judged that the user is in the walking state, then step S0431 is performed, and a finer motion state of the user is further judged based on the inertia signal.

Fig. 6 is a flow diagram of an implementation method of step S0431 in an example of the present application. As shown in Fig. 6, step S0431 that the first feature value is calculated according to the linear acceleration signal and the second feature value is calculated according to the angular acceleration signal includes: step S0431a and step S0431b.

In step S0431a, a first modulus of the linear acceleration signal is calculated, a first initial feature value is obtained according to the first modulus. And, a second modulus of the angular acceleration signal is calculated, and a second initial feature value is obtained according to the second modulus. Those skilled in the art can understand that an acceleration signal generally includes an amplitude of the acceleration signal and a direction of the acceleration signal, and a modulus of an acceleration signal refers to an amplitude of the acceleration signal. Taking the linear acceleration signal as an example, if the linear acceleration component in the x direction is Acc_x, the linear acceleration component in the y direction is Acc_y, and the linear acceleration component in the z direction is Acc_z, then the modulus a1 of the linear acceleration signal can be calculated by $a1 = \sqrt{Acc\_x^2 + Acc\_y^2 + Acc\_z^2}$. Accordingly, the modulus a2 of the angular acceleration signal can be calculated by $a2 = \sqrt{gyro\_x^2 + gyro\_y^2 + gyro\_z^2}$, if the angular acceleration component in the x direction is gyro_x, the angular acceleration component in the y direction is gyro_y, and the angular acceleration component in the z direction is gyro_z. It should be noted that a direction of the acceleration signal on the terminal, for example, a mobile, is fixed.

In some examples, the initial feature values corresponding to the modulus of the linear acceleration signal and the modulus of the angular acceleration signal respectively include at least part of a mean value, a standard deviation, a maximum value, a minimum value, a range, a quartile, an alternating component (current value - average value), a variance, kurtosis, skewness, a root mean square, a mean crossing rate, a zero crossing rate, a slope sign change, energy, a spectral centroid, spectral expansion, spectral flatness, spectral roll off, a spectral peak, and spectral kurtosis.

In step S0431b, the first feature value and the second feature value are obtained by processing the first initial feature value and the second initial feature value using a principal component analysis (PCA) algorithm respectively.

Dimensionality reduction is performed on the high-dimensional first initial feature value and the high-dimensional second initial feature value by adopting the principal component analysis algorithm. For example, a covariance matrix is calculated, an eigenvector is calculated according to the covariance matrix, and an eigenvalue is calculated, so that dimensionality reduction is completed. Next, feature values obtained after dimensionality reduction are input into the classification model.

Compared with the method in the related art that the position of the terminal is determined by utilizing the technologies such as satellite positioning so as to detect the mountain climbing mode, the example of the present application provides the method for detecting a mountain climbing mode, in the method an overall power consumption may be lowered, and an accuracy of detecting the mountain climbing mode based on the air pressure signal and the inertia signal in the example of the present application is higher.

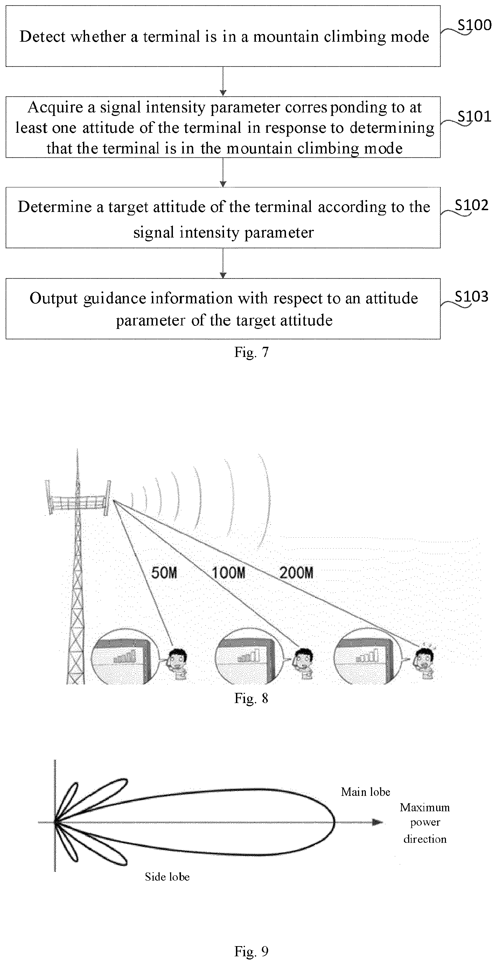

Fig. 7 is a flow diagram of a guidance method illustrated according to an example. As shown in Fig. 7, the method may be applied to a terminal, and includes the following steps: step S100, Step S101, Step S102 and Step S103.

In step S100, whether the terminal is in a mountain climbing mode is detected.

Whether the terminal is in the mountain climbing mode is detected by utilizing the method for detecting a mountain climbing mode provided by any example of the present application.

In step S101, a signal intensity parameter corresponding to at least one attitude of the terminal is acquired in response to determining that the terminal is in the mountain climbing mode.

The signal intensity parameter represents a signal intensity value between the terminal and a base station.

In some examples, the terminal is a mobile terminal, such as a mobile phone, a tablet and a wearable device, and the guidance method may be implemented through communication interactions between the terminal and the base station.

In some examples, the signal intensity parameter may include at least one of the following parameters: reference signal receiving power (RSRP), a received signal strength indicator (RSSI), reference signal receiving quality (RSRQ) and a signal to interference plus noise ratio (SINR).

In some examples, the attitude of the terminal may represent a space position state of the terminal itself and a carrying state of a terminal by the user, namely a position and an angle of the terminal in a corresponding space coordinate system and a holding or a carrying manner of the terminal by the user. The space position state of the terminal and the carrying state of the terminal by the user may both affect a signal state between the terminal and the base station.

Fig. 8 is a schematic diagram of a signal state of the terminal illustrated according to an example. As shown in Fig. 8, the signal intensity of the terminal is related to a distance to the base station, and on the premise of not considering an azimuth angle and a downward inclination angle of antennas of the base station, the smaller the distance between the terminal and the base station, the higher the signal intensity. In practical applications, the corresponding signal intensity of the terminal at each position in a coverage area of the base station is related to the azimuth angle of the antenna of the base station, and the coverage area of the base station is related to the downward inclination angle of the antenna of the base station.

Fig. 9 is a schematic diagram of a relationship between a maximum power direction of an antenna and a main lobe and a side lobe of the antenna. The azimuth angle of the antenna is a horizontal included angle between a north direction line of the antenna position and a direction line pointed by the antenna in a clockwise direction, which is an orientation angle of the antenna. As shown in Fig. 9, a main lobe direction of the antenna is closer to the maximum power direction of the antenna than a side lobe direction. For example, taking an example that the base station has three antennas, each antenna covers a range of 120°, corresponding to a 360° signal range of the base station. If the azimuth angle of one of the antennas is 0°, then the antenna covers an area of 300° to 60°, in which an area of 330° to 30° corresponds to the main lobe direction of the antenna, and other areas correspond to the side lobe direction. If the terminal has been in the coverage area of the base station already, when the terminal is in the main lobe direction of the antenna, a signal state of the terminal is better than a signal state of the terminal when the terminal is in the side lobe direction of the antenna.

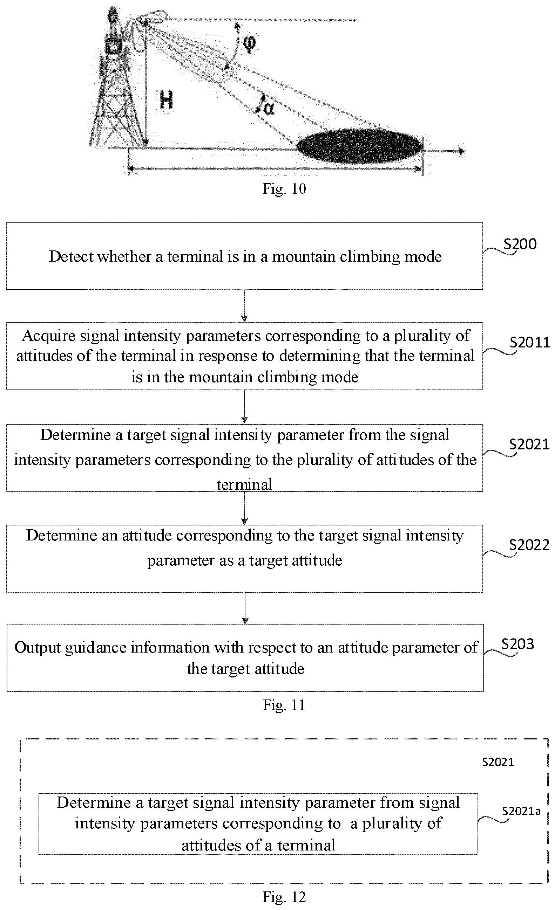

Fig. 10 is a schematic diagram of a coverage area corresponding to a main lobe direction of an antenna illustrated according to an example. As shown in Fig. 10, a size and a position of the coverage area are affected by an antenna height H and a downward inclination angle $\varphi$, and a half angle $\alpha$ of a vertical lobe angle is configured to measure a lobe width and is also commonly configured to set the downward inclination angle $\varphi$ of the antenna. The downward inclination angle $\varphi$ of the antenna is also called a pitch angle and may be used for denoting an included angle between a radiation direction of the antenna and a horizontal plane where the antenna is located. The larger the downward inclination angle, the wider an overall signal coverage range of the base station, and the smaller the downward inclination angle, the narrower the overall signal coverage range of the base station. Thus a situation that the signal state of a position close to the base station is poor may also occur when the downward inclination angle is set to be small.

Correspondingly, the signal state of the terminal is affected by various factors of the terminal and the base station, where the space position state of the terminal affects whether the antenna of the terminal accords with the antenna direction and the main lobe direction of the base station, the carrying and holding state of the terminal by the user may affect whether the terminal antenna performing signal transceiving under a working state will be shielded, and the signal intensity of the terminal may change when the terminal is in different attitudes.

In some examples, the terminal includes a plurality of receiving antennas. Before acquiring the signal intensity parameter corresponding to the at least one attitude of the terminal, the method further includes: controlling all the receiving antennas to be in a working state.

Taking an example that the terminal has four receiving antennas, the four receiving antennas are all controlled to be in the working state, one of four received signals with a maximum signal intensity value is selected, and thus the receiving antenna corresponding to the best signal state is determined, so a target attitude of the terminal is affected. In some examples, the method further includes increasing transceiving signal power of the antennas of the terminal to improve the signal intensity.

In step S102, the target attitude of the terminal is determined according to the signal intensity parameter.

The target attitude is determined according to the acquired signal intensity parameter corresponding to an attitude of the terminal.

In step S103, guidance information with respect to an attitude parameter of the target attitude is output.

The guidance information may be con figured to indicate the user to adjust the attitude of the terminal to the target attitude so as to change the signal state of the terminal.

In some examples, the guidance information may indicate the user in one or more of a plurality of manners such as displaying text guidance, displaying video image guidance, voice broadcasting, vibration prompting, and the like. In some examples, the terminal may be controlled to execute the above indicating manners.

In some examples, the attitude parameter may include an angle parameter and a hand-held gesture parameter, where the hand-held gesture parameter corresponds to various terminal holding manners of the user, the angle parameter may be configured to represent the azimuth angle of the terminal and a height angle corresponding to a connection line between the terminal and the antenna of the base station. Thus the user may be indicated according to the angle parameter and the hand-held gesture parameter to change the terminal holding manner and change the angle of the terminal so as to enable the terminal to be in the target attitude.

The example of the present application provides the guidance method for the terminal, the signal intensity parameter corresponding to the at least one attitude of the terminal is acquired in response to determining that the terminal is in the mountain climbing mode, the target attitude of the terminal is determined according to an acquired signal intensity parameter, the guidance information with respect to the attitude parameter of the target attitude is output to guide the user to adjust the attitude of the terminal to the target attitude. Thus, for the terminal in the mountain climbing mode, on the basis of not affecting the use experience of the terminal, the current signal state of the terminal is changed in a targeted manner, and the signal intensity of the terminal is improved. Compared with an existing solution that the transceiving signal power of the antenna of the terminal is improved when it is detected that the signal of the terminal is weakened, the guidance method in the example of the present application, utilizes less terminal power consumption, has higher flexibility on improvement of the signal intensity, and can enable the terminal to be under an ideal signal state.

Fig. 11 is a flow diagram of another guidance method illustrated according to an example. The method is an optional implementation solution based on the method shown in Fig. 7. As shown in Fig. 11, the method may be applied to a terminal, and includes the following steps: step S200, step S2011, step S2021, step S2022 and step S203.

In step S200, whether the terminal is in a mountain climbing mode is detected.

In step S2011, signal intensity parameters corresponding to a plurality of attitudes of the terminal are acquired in response to determining that the terminal is in the mountain climbing mode.

In step S2021, a target signal intensity parameter is determined from the signal intensity parameters corresponding to the plurality of attitudes of the terminal.

A signal intensity parameter meeting a preset condition is determined as the target signal intensity parameter from acquired signal intensity parameters corresponding to the plurality of attitudes after processing and calculating. For example, at least one of the acquired signal intensity parameters corresponding to the plurality of attitudes which represents a signal intensity value greater than or equal to a preset signal intensity threshold is determined as the target signal intensity parameter. Or, at least one of the acquired signal intensity parameters corresponding to the plurality of attitudes which represents a signal intensity value less than or equal to a preset signal intensity threshold is abandoned, and the target signal intensity parameter is determined from remaining signal intensity parameters. Or, the target signal intensity parameter is determined after abnormal values in the acquired signal intensity parameters corresponding to the plurality of attitudes are processed, and the like.

In step S2022, an attitude corresponding to the target signal intensity parameter is determined as a target attitude.

The signal intensity parameters have a corresponding relationship with various acquired attitudes of the terminal, and the current target attitude of the terminal may be determined according to the determined target signal intensity parameter.

In step S203, guidance information with respect to an attitude parameter of the target attitude is output.

Thus, the target attitude is determined by processing and calculating the signal intensity parameters corresponding to the plurality of attitudes, so that a user is guided to adjust the attitude of the terminal to improve the signal intensity of the terminal.

Fig. 12 is a flow diagram of an implementation method of step S2021 in an example of the present application. As shown in Fig. 12, step S2021 that the target signal intensity parameter is determined from the signal intensity parameters corresponding to the plurality of attitudes of the terminal includes: step S2021a.

In step S2021a, a signal intensity parameter representing a maximum signal intensity value in the signal intensity parameters corresponding to the plurality of attitudes of the terminal is determined as the target signal intensity parameter.

The signal intensity parameter representing the maximum signal intensity value in the acquired signal intensity parameters is determined as the target signal intensity parameter, and thus the attitude corresponding to the target signal intensity parameter is determined as the target attitude of the terminal, so that the terminal may be in an ideal signal state after being adjusted to the target attitude.

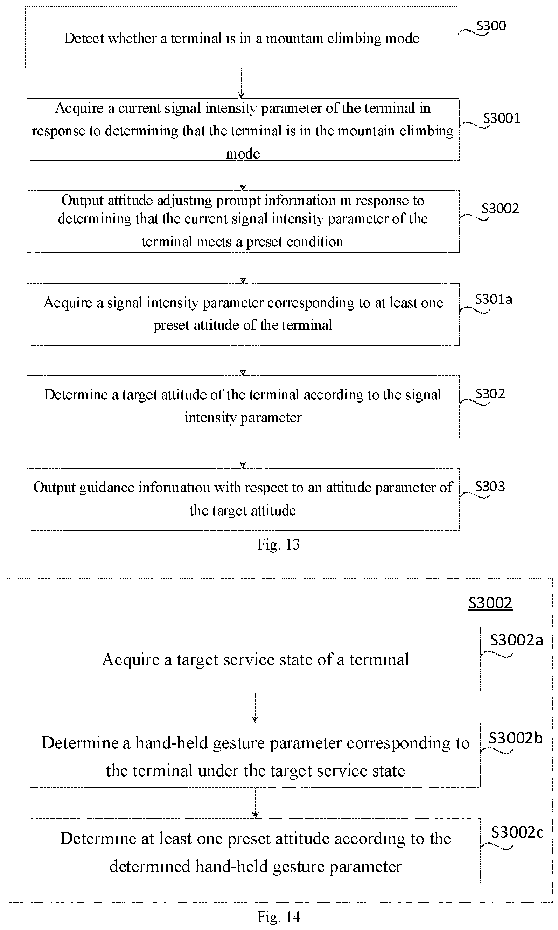

Fig. 13 is a flow diagram of yet another guidance method illustrated according to an example. The method is an optional implementation solution based on the method shown in Fig. 7. As shown in Fig. 13, the method may be applied to a terminal, and includes the following steps: step S300, step S3001, step S3002, step S301a, step S302 and step S303.

In step S300, whether the terminal is in a mountain climbing mode is detected.

In step S3001, a current signal intensity parameter of the terminal is acquired in response to determining that the terminal is in the mountain climbing mode.

In step S3002, attitude adjusting prompt information is output in response to determining that the current signal intensity parameter of the terminal meets a preset condition.

The attitude adjusting prompt information is configured to indicate a user to adjust an attitude of the terminal to at least one preset attitude.

When the current signal intensity parameter of the terminal meets the preset condition, for instance, it is determined according to the current signal intensity parameter that a current signal state of the terminal is poor and a signal state of the terminal does not meet a current service requirement of the terminal, the attitude adjusting prompt information is configured to indicate the user to adjust the attitude of the terminal.

In some examples, the situation that the current signal intensity parameter of the terminal meets the preset condition may include: a signal intensity value represented by the signal intensity parameter being less than or equal to a preset signal intensity threshold, a signal intensity value represented by the signal intensity parameter being in a fluctuating state, and the like.

In some examples, the attitude adjusting prompt information may indicate the user in any one of a plurality of manners such as displaying text guidance, displaying video image guidance, voice broadcasting and vibration prompting. In some examples, the terminal may be controlled to execute the above indicating manners. Or, in some examples, the terminal displays a guidance interface according to the attitude adjusting prompt information, and the user begins to adjust the attitude of the terminal based on prompts on the guidance interface.

In step S301a, a signal intensity parameter corresponding to the at least one preset attitude of the terminal is acquired.

The signal intensity parameter represents a signal intensity value between the terminal and a base station. In step S301, an attitude adjusting result of the terminal, namely at least one attitude of the terminal and the signal intensity parameter corresponding to the at least one attitude, is acquired after the user adjusts the attitude of the terminal based on prompts of the attitude adjusting prompt information.

In order to avoid situations that when the user adjusts the attitude of the terminal, an adjusted angle and a holding attitude change are limited and cannot change a signal of the terminal, and acquired data are incomplete, or, when the user adjusts the attitude of the terminal, adjusted angles and the number of holding attitudes are limited and acquired attitude and signal intensity parameter samples are not enough, the attitude adjusting prompt information is configured to guide the user to adjust the terminal to the preset attitude so as to guarantee completeness of the acquired data.

In some examples, the terminal displays the guidance interface according to the attitude adjusting prompt information, and the user adjusts the terminal to various preset attitudes based on guidance of the guidance interface, such as angle guidance and holding attitude guidance.

In step S302, the target attitude of the terminal is determined according to the signal intensity parameter.

In step S303, guidance information with respect to an attitude parameter of the target attitude is output.

Fig. 14 is a flow diagram of an implementation method of step S3002 in an example of the present application. The method is an optional implementation solution based on the method shown in Fig. 13. As shown in Fig. 14, in step S3002, before outputting the attitude adjusting prompt information, the method includes: step S3002a to step S3002c.

In step S3002a, a target service state of the terminal is acquired.

The target service state of the terminal represents a current terminal service or a terminal service to be executed using the terminal of a user. The terminal service may include calling of system applications, such as making and receiving calls, editing short messages and using cameras. The terminal service may further include calling of third-party applications, such as using a web application, using a short video application and using a game application.

In step S3002b, a hand-held gesture parameter corresponding to the terminal under the target service state is determined.

The hand-held gesture parameter represents a holding or carrying state of the terminal by the user. In some examples, the holding or carrying state corresponding to the hand-held gesture parameter may include double-hand horizontal holding, left-hand holding, right-hand holding, hand-on-the-left, hand-on-the-right and the like. Each holding or carrying state corresponds to at least one target service state, that is, the terminal executing the service corresponding to the target service state has an association relationship with the holding or carrying state of the terminal by the user.

In step S3002c, the at least one preset attitude is determined according to the determined hand-held gesture parameter.

At least one attitude corresponding to the hand-held gesture parameter is used as the preset attitude.

In some examples, the attitude parameter further includes an angle parameter, the attitude adjusting prompt information may indicate the user to adjust the terminal to a preset angle under the determined holding or carrying state, and each preset angle corresponds to one preset attitude.

It is to be noted that the example of the present application does not limit the execution order of step S3001 and step S3002a to step S3002c, that is, step S3002a to step S3002c may be executed before step S3001, or step S3002a to step S3002c may be executed after step S3001, or step S3002a to step S3002 and step S3001 may be executed synchronously.

Thus, attitude adjustment of the terminal is guided based on the current target service state of the terminal, and the target attitude determined and output later can effectively improve the signal intensity of the terminal in a case of fitting a current target service.

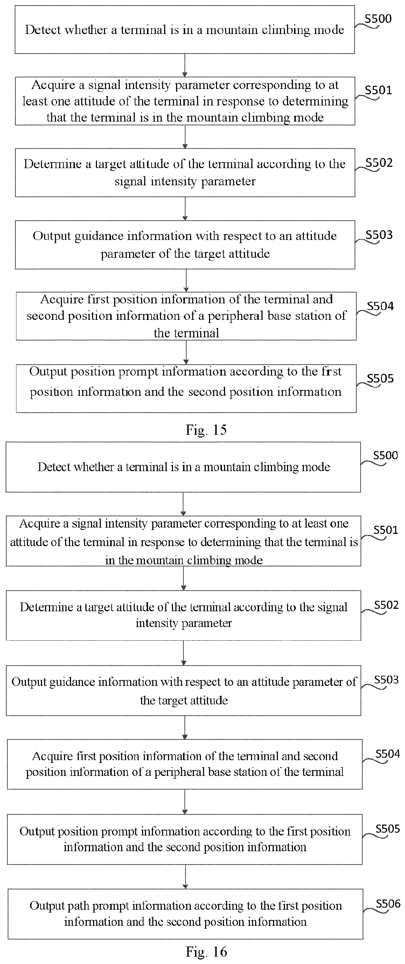

Fig. 15 is a flow diagram of yet another guidance method illustrated according to an example. The method is an optional implementation solution based on the method shown in Fig. 7. As shown in Fig. 15, the method may be applied to a terminal, and includes the following steps: step S500, step S501, step S502, step S503 and step S504.

In step S500, whether the terminal is in a mountain climbing mode is detected.

In step S501, a signal intensity parameter corresponding to at least one attitude of the terminal is acquired in response to determining that the terminal is in the mountain climbing mode.

The signal intensity parameter represents a signal intensity value between the terminal and a base station.

In step S502, a target attitude of the terminal is determined according to the signal intensity parameter.

In step S503, guidance information with respect to an attitude parameter of the target attitude is output.

In step S504, first position information of the terminal and second position information of a peripheral base station of the terminal are acquired.

The peripheral base station of the terminal is a base station which is close to the terminal in a geographic position and whose communication system can meet terminal device requirements. In some examples, base stations with linear distances to the terminal less than or equal to a preset distance threshold are used as the peripheral base stations of the terminal, and the terminal may not be in a coverage area of part of the peripheral base stations. Or, in some examples, if the terminal is located in a coverage area of a base station, then the base station is regarded as the peripheral base station of the terminal. Or, in some examples, the peripheral base station of the terminal may be determined according to cell measurement information of the terminal, and the second position information can be acquired according to the cell measurement information.

In step S505, position prompt information is output according to the first position information and the second position information.

The position prompt information is configured to indicate a user a position of the terminal and a position of the peripheral base station.

For example, for regions with sparsely-distributed and fewer base stations such as suburbans and mountainous areas, an antenna downward inclination angle of the base stations may be set to be smaller in order to ensure a wider coverage range of limited base stations. Due to an existence of the downward inclination angle, there may be areas that are not covered by signals close to the base stations, the user may be indicated to adjust the position of the terminal to the position as close to the base stations as possible within the coverage area of the base stations or to corresponding areas in a main lobe direction of base station antennas based on the position prompt information, so to obtain the current best signal experience. In some examples, the number of the peripheral base stations indicated by the position prompt information is less than or equal to a preset number.

In some examples, the position prompt information may indicate the user in any one or more of a plurality of manners such as displaying text guidance, displaying video image guidance, voice broadcasting and vibration prompting. Or, in some examples, position icons of the terminal and the base station are displayed on a map displayed on the terminal to indicate the user. In some examples, the terminal may be controlled to execute the above indicating manners.

In some examples, legality validation of the peripheral base stations is further included, to prevent mixing of pseudo-base stations and other fake wireless communication devices.

Fig. 16 is a flow diagram of yet another guidance method illustrated according to an example. The method is an optional implementation solution based on the method shown in Fig. 15. As shown in Fig. 16, on the basis of the method shown in Fig. 15, the method further includes step S506 in addition to step S500 to step S505. Step S506 is described in details below.

In step S506, path prompt information is output according to the first position information and the second position information.

The path prompt information is configured to indicate the user a path between the terminal and the peripheral base station. Based on the path prompt information, the user may be accurately indicated to adjust the position of the terminal to a position as close to the base station as possible within the coverage area of the base station or a corresponding area of the main lobe direction of the antenna of the base station along a passable path on the basis of the position prompt information, so as to obtain the current best signal experience.

In some examples, the path prompt information may indicate the user in any one or more of a plurality of manners such as displaying text guidance, displaying video image guidance, voice broadcasting and vibration prompting. Or in some examples, a path connection line between the terminal and the base station is displayed on a map displayed on the terminal to indicate the user. In some examples, the terminal may be controlled to execute the above indicating manners.

The guidance method provided by the present application is described below in combination with practical applications.

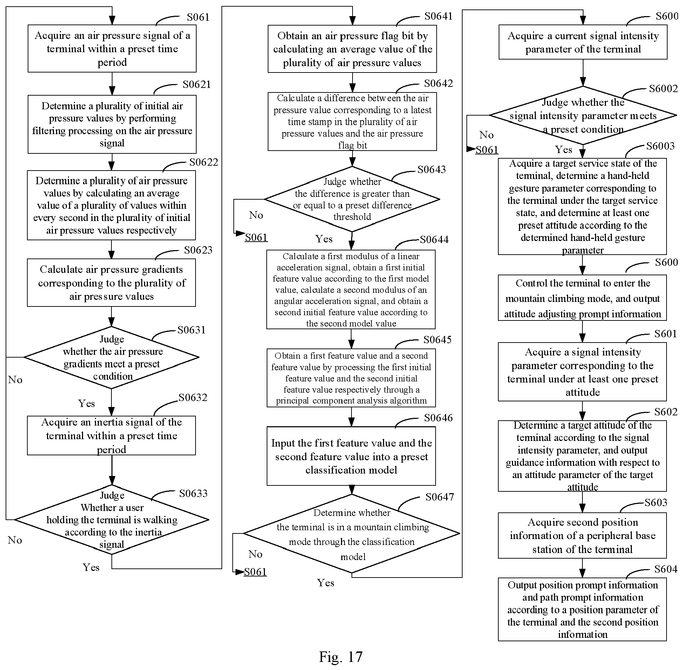

Fig. 17 is a flow diagram of yet another guidance method illustrated according to an example. The method is applied to a terminal, for example, the terminal is a mobile phone device. As shown in Fig. 17, the method includes: step S061, step S0621 to step S0623, step S0631 to step S0633, step S0641 to step S0647, step S6001 to step S6004 and step S601 to step S604.

In step S061, an air pressure signal of the terminal within a preset time period is acquired.

The air pressure signal is acquired through an air gauge.

In step S0621, a plurality of initial air pressure values are determined by performing filtering processing on the air pressure signal.

A high-order infinite impulse response filter is adopted to perform filtering processing on the air pressure signal.

In step S0622, a plurality of air pressure values are determined by calculating an average value of a plurality of values within every second in the plurality of initial air pressure values respectively.

In step S0623, air pressure gradients corresponding to the plurality of air pressure values are calculated.

In step S0631, whether the air pressure gradients meet a preset condition is judged.

In step S0631, if the air pressure gradients are greater than or equal to a preset first air pressure gradient threshold and are less than or equal to a preset second air pressure gradient threshold, step S0632 is performed, where the second air pressure gradient threshold is greater than the first air pressure gradient threshold. If the air pressure gradients are less than the first air pressure gradient threshold, then it is judged that a user holding the terminal is walking on a flat ground or a ground with merely a certain slope, and step S061 continues to be performed to update an acquired air pressure signal. If the air pressure gradients are greater than the second air pressure gradient threshold, then it is judged that the user is taking a vehicle or other devices, and step S061 continues to be performed to update the acquired air pressure signal.

In step S0632, an inertia signal of the terminal within the preset time period is acquired.

The inertia signal is acquired based on an inertial measurement unit.

In step S0633, whether the user holding the terminal is walking is judged according to the inertia signal.

Whether the user holding the terminal is walking is judged using a preset pedometer algorithm.

In step S0633, if it is judged that the user is walking, step S0641 is performed. If it is judged that the user is not walking, step S061 continues to be performed to update the acquired air pressure signal.

In step S0641, an air pressure flag bit is obtained by calculating an average value of the plurality of air pressure values.

In step S0642, a difference between the air pressure value corresponding to a latest time stamp in the plurality of air pressure values and the air pressure flag bit is calculated.

In step S0643, whether the difference is greater than or equal to a preset difference threshold is judged.

In step S0643, if the difference is greater than or equal to the preset difference threshold, step S0643 1a is performed. If the difference is less than the difference threshold, it is judged that the user is not in a mountain climbing state and may walk on a long stair at an open field, and step S061 continues to be performed to update the acquired air pressure signal.

In step S0644, a first modulus of a linear acceleration signal is calculated, a first initial feature value is obtained according to the first modulus, a second modulus of an angular acceleration signal is calculated, and a second initial feature value is obtained according to the second modulus.

The inertia signal includes the linear acceleration signal and the angular acceleration signal. The initial feature values corresponding to the modulus of the linear acceleration signal and the modulus of the angular acceleration signal respectively include a mean value, a standard deviation, a maximum value, a minimum value, a range, a quartile, an alternating component (current value - average value), a variance, kurtosis, skewness, a root mean square, a mean crossing rate, a zero crossing rate, slope sign change, energy, a spectral centroid, spectral expansion, spectral flatness, spectral roll off, a spectral peak, and spectral kurtosis. Thus, both the first initial feature value and the second initial feature value include 21 features.

In step S0645, a first feature value and a second feature value are obtained by processing the first initial feature value and the second initial feature value respectively through a principal component analysis algorithm.

In step S0646, the first feature value and the second feature value are input into a preset classification model.

In step S0647, whether the terminal is in the mountain climbing mode is determined through the classification model.

In step S0647, if it is determined that the terminal is in the mountain climbing mode, step S6001 is performed. If it is determined that the terminal is not in the mountain climbing mode, the user holding the terminal may walk on a stair in a building, and step S061 continues to be performed to update the acquired air pressure signal.

In step S6001, a current signal intensity parameter of the terminal is acquired.

In step S6002, whether the signal intensity parameter meets a preset condition is judged.

In step S6002, if a signal intensity value represented by the signal intensity parameter is less than or equal to a preset signal intensity threshold, step S6003 is performed. If a signal intensity value represented by the signal intensity parameter is greater than the signal intensity threshold, step S061 continues to be performed to update the acquired air pressure signal.

In step S6003, a target service state of the terminal is acquired, a hand-held gesture parameter corresponding to the terminal under the target service state is determined, and at least one preset attitude is determined according to a determined hand-held gesture parameter.

For example, an acquired target service state is using a game application, and a holding attitude corresponding to the determined hand-held gesture parameter is double-hand horizontal holding. Correspondingly, a determined preset attitude is a plurality of preset angles under a double-hand horizontal holding state.

In step S6004, the terminal is controlled to enter the mountain climbing mode, and attitude adjusting prompt information is output.

The attitude adjusting prompt information is configured to indicate the user to adjust the terminal to a preset angle in a case of horizontally holding the terminal with both hands, including indication of the user to adjust an orientation and pitching of the terminal. After the terminal enters the mountain climbing mode, a guidance interface is displayed, and the user is indicated in the manners of displaying text guidance and displaying video image guidance.

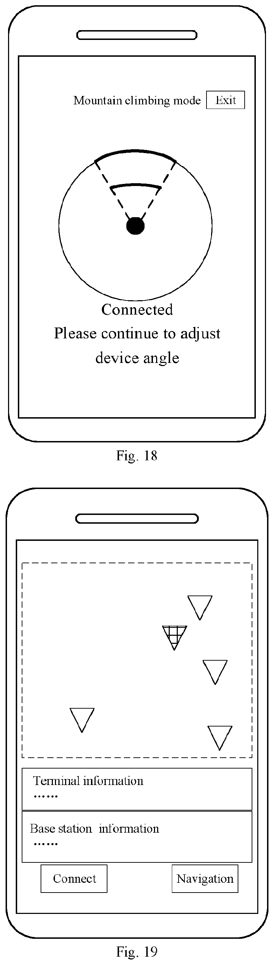

Fig. 18 is a schematic diagram of a guidance interface illustrated according to an example. As shown in Fig. 18, a sector selected by a long solid curve and two dashed lines is configured to indicate the user a direction of a current working antenna, the user maintains the double-hand horizontal holding state to adjust the orientation and a pitch angle of a mobile phone. After data for each preset attitude are collected, the user may be prompted by text below or changing a color of the sector, and the user may also click an exit button to manually exit the mountain climbing mode when needed.

In step S601, a signal intensity parameter corresponding to at least one preset attitude of the terminal is acquired.

Correspondingly, the signal intensity parameter of the terminal under the double-hand horizontal holding state in each preset angle is acquired.

In step S602, a target attitude of the terminal is determined according to the signal intensity parameter, and guidance information with respect to an attitude parameter of the target attitude is output.

The guidance information is configured to indicate the user to adjust an attitude of the terminal to the target attitude. Correspondingly, the determined target attitude is a particular angle under the double-hand horizontal holding state. In some examples, after the user adjusts a mobile phone to the target attitude, the mobile phone may exit the mountain climbing mode automatically and execute a target service in a current signal state, that is, a game application is started.

In step S603, second position information of a peripheral base station of the terminal is acquired.

In step S604, position prompt information and path prompt information are output according to a position parameter of the terminal and the second position information.

The position prompt information is configured to indicate the user a position of the terminal and a position of the peripheral base station. The path prompt information is configured to indicate the user a path between the terminal and the peripheral base station.

Fig. 19 is a schematic diagram of another guidance interface illustrated according to an example. As shown in Fig. 19, for example, a map displayed on the terminal is denoted by a dashed box, a position icon of the terminal is denoted by a triangle filled with graticule lines, position icons of base stations are denoted by blank triangles. Terminal information and information of abase station selected by the user are displayed below. The user clicks a connection button and then the terminal will try to be connected with the selected base station, the user clicks a navigation button and then a path connection line between the terminal and the selected base station will be displayed to indicate the user, and the user may approach the base station along a marked path to obtain a better signal experience.

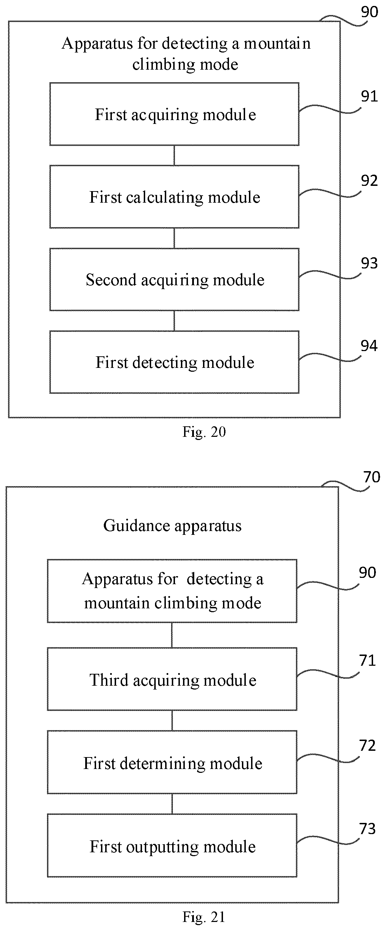

Fig. 20 is a block diagram of an apparatus for detecting a mountain climbing mode illustrated according to an example. As shown in Fig. 20, the apparatus 90 for detecting a mountain climbing mode includes: a first acquiring module 91, a first calculating module 92, a second acquiring module 93 and a first detecting module 94.

The first acquiring module 91 is configured to acquire an air pressure signal of a terminal within a preset time period.

The first calculating module 92 is configured to determine a plurality of air pressure values according to the air pressure signal, and calculate air pressure gradients corresponding to the plurality of air pressure values.

The second acquiring module 93 is configured to acquire an inertia signal of the terminal within the preset time period in response to determining that the air pressure gradients meet a preset condition.

The first detecting module 94 is configured to detect whether the terminal is in a mountain climbing mode according to the plurality of air pressure values and the inertia signal.

In some examples, the first calculating module 92 is configured to: determine a plurality of initial air pressure values by performing filtering processing on the air pressure signal; and determine the plurality of air pressure values by calculating an average value of a plurality of values within every N seconds in the plurality of initial air pressure values respectively.

In some examples, the second acquiring module 93 is configured to acquire the inertia signal in response to determining that the air pressure gradients are greater than or equal to a preset first air pressure gradient threshold and less than or equal to a preset second air pressure gradient threshold.

In some examples, the first detecting module 94 is configured to: obtain an air pressure flag bit by calculating an average value of the plurality of air pressure values; calculate a difference between the air pressure value corresponding to a latest time stamp in the plurality of air pressure values and the air pressure flag bit; and detect whether the terminal is in the mountain climbing mode according to the inertia signal in response to determining that the difference is greater than or equal to a preset difference threshold.

In some examples, the first detecting module 94 is configured to: calculate a first feature value according to a linear acceleration signal and calculate a second feature value according to an angular acceleration signal; and input the first feature value and the second feature value into a preset classification model, and determine whether the terminal is in the mountain climbing mode through the classification model.

In some examples, the first detecting module 94 is configured to: calculate a first modulus of the linear acceleration signal, obtain a first initial feature value according to the first modulus, calculate a second modulus of the angular acceleration signal, and obtain a second initial feature value according to the second modulus; and obtain the first feature value and the second feature value by processing the first initial feature value and the second initial feature value respectively through a principal component analysis algorithm.

Fig. 21 is a block diagram of a guidance apparatus illustrated according to an example. In some examples, the guidance apparatus may be a guidance apparatus 70 for a terminal. As shown in Fig. 21, the guidance apparatus 70 includes: an apparatus 90 for detecting a mountain climbing mode, a third acquiring module 71, a first determining module 72 and a first outputting module 73.

The apparatus 90 for detecting a mountain climbing mode is the apparatus for detecting a mountain climbing mode provided by any example of the present application.

The third acquiring module 71 is configured to acquire a signal intensity parameter corresponding to at least one attitude of the terminal in response to determining that the terminal is in the mountain climbing mode, where the signal intensity parameter represents a signal intensity value between the terminal and a base station.

The first determining module 72 is configured to determine a target attitude of the terminal according to the signal intensity parameter.

The first outputting module 73 is configured to output guidance information with respect to an attitude parameter of the target attitude.

In some examples, the third acquiring module 71 is configured to acquire signal intensity parameters corresponding to a plurality of attitudes of the terminal in response to determining that the terminal is in the mountain climbing mode. The first determining module 72 is configured to determine a target signal intensity parameter from the signal intensity parameters corresponding to the plurality of attitudes of the terminal, and determine an attitude corresponding to the target signal intensity parameter as the target attitude.

In some examples, the first determining module 72 is configured to determine a signal intensity parameter representing a maximum signal intensity value in the signal intensity parameters corresponding to the plurality of attitudes of the terminal as the target signal intensity parameter.

In some examples, the guidance apparatus 70 further includes: a fourth acquiring module and a second outputting module.

The fourth acquiring module is configured to acquire a current signal intensity parameter of the terminal in response to determining that the terminal is in the mountain climbing mode.

The second outputting module is configured to output attitude adjusting prompt information in response to determining that the current signal intensity parameter of the terminal meets a preset condition, where the attitude adjusting prompt information is configured to indicate a user to adjust an attitude of the terminal to at least one preset attitude. The third acquiring module 71 is configured to acquire a signal intensity parameter corresponding to the at least one preset attitude of the terminal.

In some examples, the guidance apparatus 70 further includes: a fifth acquiring module and a second determining module.

The fifth acquiring module is configured to acquire a target service state of the terminal.

The second determining module is configured to: determine a hand-held gesture parameter corresponding to the terminal under the target service state; and determine the at least one preset attitude according to the determined hand-held gesture parameter.

In some examples, the terminal includes a plurality of receiving antennas. The guidance apparatus 70 further includes: a control module.

The control module is configured to control all the receiving antennas to be in a working state.

In some examples, the guidance apparatus 70 further includes: a sixth acquiring module and a third outputting module.

The sixth acquiring module is configured to acquire first position information of the terminal and second position information of a peripheral base station of the terminal.

The third outputting module is configured to output position prompt information according to the first position information and the second position information, where the position prompt information is configured to indicate a user a position of the terminal and a position of the peripheral base station.

In some examples, the guidance apparatus 70 further includes: a fourth outputting module.

The fourth outputting module is configured to output path prompt information according to the first position information and the second position information, where the path prompt information is configured to indicate the user a path between the terminal and the peripheral base station.

As for the apparatus in the above example, the specific manner in which each module performs operations has been described in detail in the example of the method, which will not be described in detail here.

The present application further provides a computer readable storage medium for storing computer program instructions, where the program instructions, when executed by a processor, perform steps of the method for detecting a mountain climbing mode provided by the present application, or, the program instructions, when executed by the processor, perform steps of the guidance method for the terminal provided by the present application.

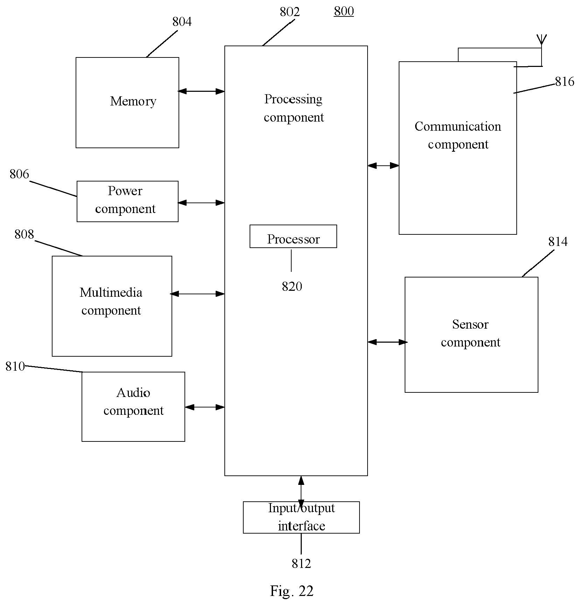

Fig. 22 is a block diagram of an electronic device 800 illustrated according to an example. For instance, the electronic device 800 may be a mobile phone, a computer, a digital broadcasting terminal, a messaging device, a game console, a tablet device, a medical device, a fitness device, a personal digital assistant, and the like.

Referring to Fig. 22, the electronic device 800 may include one or more of the following components: a processing component 802, a memory 804, a power component 806, a multimedia component 808, an audio component 810, an input/output interface 812, a sensor component 814, and a communication component 816.

The processing component 802 generally controls an overall operation of the electronic device 800, such as operations associated with display, telephone call, data communication, camera operations, and recording operations. The processing component 802 may include one or more processors 820 to execute instructions to complete all or part of the steps of the above method for detecting a mountain climbing mode or, to complete all or part of the steps of the above guidance method for the terminal. In addition, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations at the electronic device 800. Instances of these data include instructions for any application or method operating on the electronic device 800, contact data, phonebook data, messages, pictures, videos, and the like. The memory 804 may be implemented by any type of volatile or nonvolatile storage device or combinations of volatile storage device and nonvolatile storage device, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk or an optic disk.

The power component 806 provides power for various components of the electronic device 800. The power component 806 may include a power management system, one or more power sources and other components associated with generating, managing and distributing power for the electronic device 800.

The multimedia component 808 includes a screen providing an output interface between the electronic device 800 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor can not only sense a boundary of touch or sliding operation, but also detect a duration and a pressure related to the touch or sliding operation. In some examples, the multimedia component 808 includes a front camera and/or a rear camera. When the electronic device 800 is in an operation mode, such as a shooting mode or a video mode, the front camera and/or the rear camera can receive external multimedia data. Each front camera and rear camera may be a fixed optical lens system or have a focal length and optical zoom capability.

The audio component 810 is configured to output and/or input audio signals. For example, the audio component 810 includes a microphone (MIC) configured to receive an external audio signal when the electronic device 800 is in the operation mode, such as a call mode, a recording mode, and a speech recognition mode. The received audio signal may be further stored in the memory 804 or transmitted via the communication component 816. In some examples, the audio component 810 further includes a speaker for outputting an audio signal.

The input/output interface 812 provides an interface between the processing component 802 and a peripheral interface module which may be a keyboard, a click wheel, a button, and the like. These buttons may include but are not limited to: a home button, volume buttons, a start button and a lock button.

The sensor component 814 includes one or more sensors for providing state evaluation of various aspects of the electronic device 800. For example, the sensor component 814 can detect an on/off state of the electronic device 800 and relative positioning of the components, for example, the component is a display and a keypad of the electronic device 800. The sensor component 814 can also detect a change of the position of the electronic device 800 or one component of the electronic device 800, a presence or an absence of user contact with the electronic device 800, an azimuth or acceleration/deceleration of the electronic device 800, and a temperature change of the electronic device 800. The sensor component 814 may include a proximity sensor configured to detect a presence of nearby objects without any physical contact. The sensor component 814 may further include an optical sensor, such as a CMOS or CCD image sensor, for use in imaging applications. In some examples, the sensor component 814 may further include an acceleration sensor, a gyroscope sensor, a magnetic sensor, a pressure sensor, or a temperature sensor.

The communication component 816 is configured to facilitate wired or wireless communication between the electronic device 800 and other devices. The electronic device 800 may access a wireless network based on a communication standard, such as WiFi, 2G or 3G, or combination of them. In an example, the communication component 816 receives a broadcast signal or broadcast-related information from an external broadcast management system via a broadcast channel. In an example, the communication component 816 further includes a near field communication (NFC) module to facilitate short-range communication. For example, the NFC module may be implemented based on a radio frequency identification (RFID) technology, an infrared data association (IrDA) technology, an ultra wideband (UWB) technology, a Bluetooth (BT) technology and other technologies.

In an example, the electronic device 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements for performing the above method for detecting a mountain climbing mode or the guidance method for the terminal.

In an example, a non-transitory computer readable storage medium including instructions, such as the memory 804 including instructions, which can be executed by the processor 820 of the electronic device 800 to complete the above method for detecting a mountain climbing mode or the guidance method for the terminal, is also provided. For example, the non-temporary computer readable storage medium may be a ROM, a random access memory (RAM), a CD-ROM, a magnetic tape, a floppy disk, an optical data storage device, and the like.

In addition to independent electronic devices, the above apparatuses may also be a part of an independent electronic device. For example, in an example, the apparatus may be an integrated circuit (IC) or a chip, where the integrated circuit may be an IC or a collection of a plurality of ICs. The chip may include but is not limited to the following types: a graphics processing unit (GPU), a central processing unit (CPU), a field programmable gate array (FPGA), a digital signal processor (DSP), an application specific integrated circuit (ASIC), a system on chip (SoC), and the like. The above integrated circuit or chip may be configured to execute executable instructions (or codes), so as to perform the above method for detecting a mountain climbing mode or the guidance method for the terminal. The executable instructions may be stored in the integrated circuit or chip, or acquired from other apparatuses or devices, for example, the integrated circuit or chip includes a processor, a memory, and an interface for communication with other apparatuses. The executable instructions may be stored in the memory, and the executable instructions, when executed by the processor, perform the above method for detecting a mountain climbing mode or the guidance method for the terminal. Or, the integrated circuit or chip may receive the executable instructions through the interface and transmit the executable instructions to the processor for processing so as to perform the above method for detecting a mountain climbing mode or the guidance method for the terminal.

In another example, a computer program product is further provided. The computer program product contains a computer program executable by a programmable apparatus. The computer program has a code part which is configured to, when executed by the programmable apparatus, perform the above method for detecting a mountain climbing mode or the guidance method for the terminal.

Other implementation solutions of the present application will be apparent to those skilled in the art from consideration of the specification and practice of the present application.

It will be appreciated that the present application is not limited to an exact construction that has been described above and illustrated in the accompanying drawings. It is intended that the scope of the present application is merely limited by the appended claims.

**Claims**

1. A method for detecting a mountain climbing mode, comprising:

   acquiring (S01) an air pressure signal of a terminal within a preset time period;

determining (S02) a plurality of air pressure values according to the air pressure signal, and calculating air pressure gradients corresponding to the plurality of air pressure values;

acquiring (S03) an inertia signal of the terminal within the preset time period in response to determining that the air pressure gradients meet a preset condition; and

detecting (S04) whether the terminal is in the mountain climbing mode according to the plurality of air pressure values and the inertia signal.

2. The method according to claim 1, wherein determining (S02) the plurality of air pressure values according to the air pressure signal comprises:

determining (S021) a plurality of initial air pressure values by performing filtering processing on the air pressure signal; and

determining (S022) the plurality of air pressure values by calculating an average value of a plurality of values within every N seconds in the plurality of initial air pressure values respectively, wherein N is a positive number.

3. The method according to claim 1 or claim 2, wherein acquiring (S03) the inertia signal of the terminal within the preset time period in response to determining that the air pressure gradients meet the preset condition comprises:

acquiring (S031) the inertia signal in response to determining that the air pressure gradients are greater than or equal to a preset first air pressure gradient threshold and less than or equal to a preset second air pressure gradient threshold, wherein the second air pressure gradient threshold is greater than the first air pressure gradient threshold.

4. The method according to any one of claims 1 to 3, wherein detecting (S04) whether the terminal is in the mountain climbing mode according to the plurality of air pressure values and the inertia signal comprises:

obtaining (S041) an air pressure flag bit by calculating an average value of the plurality of air pressure values;

calculating (S042) a difference between the air pressure value corresponding to a latest time stamp in the plurality of air pressure values and the air pressure flag bit; and

detecting (S043) whether the terminal is in the mountain climbing mode according to the inertia signal in response to determining that the difference is greater than or equal to a preset difference threshold.

5. The method according to claim 4, wherein the inertia signal comprises: a linear acceleration signal and an angular acceleration signal; and

detecting (S043) whether the terminal is in the mountain climbing mode according to the inertia signal comprises:

calculating (S0431) a first feature value according to the linear acceleration signal and calculating a second feature value according to the angular acceleration signal; and

inputting (S0432) the first feature value and the second feature value into a preset classification model, and determining whether the terminal is in the mountain climbing mode through the classification model, wherein the classification model is obtained by training inertia signal samples based on a predetermined algorithm in advance.

6. The method according to claim 5, wherein calculating (S0431) the first feature value according to the linear acceleration signal and calculating the second feature value according to the angular acceleration signal comprise:

calculating (S0431a) a first modulus of the linear acceleration signal, and obtaining a first initial feature value according to the first modulus;

calculating (S0431a) a second modulus of the angular acceleration signal, and obtaining a second initial feature value according to the second modulus; and

obtaining (S0431b) the first feature value and the second feature value by processing the first initial feature value and the second initial feature value respectively through a principal component analysis algorithm.

7. A guidance method for a terminal, comprising:

detecting (S100) whether the terminal is in a mountain climbing mode by utilizing the method for detecting a mountain climbing mode according to any one of claims 1 to 5;

acquiring (S101) a signal intensity parameter corresponding to at least one attitude of the terminal in response to determining that the terminal is in the mountain climbing mode, wherein the signal intensity parameter represents a signal intensity value between the terminal and a base station;

determining (S102) a target attitude of the terminal according to the signal intensity parameter; and

outputting (S103) guidance information with respect to an attitude parameter of the target attitude.

8. The guidance method according to claim 7, wherein acquiring (S101) the signal intensity parameter corresponding to the at least one attitude of the terminal comprises:

    acquiring (S2011) signal intensity parameters corresponding to a plurality of attitudes of the terminal; and
determining (S 102) the target attitude of the terminal according to the signal intensity parameter comprises:

        determining (S2021) a signal intensity parameter representing a maximum signal intensity value in the signal intensity parameters corresponding to the plurality of attitudes of the terminal as a target signal intensity parameter; and
determining (S2022) an attitude corresponding to the target signal intensity parameter as the target attitude.

9. The guidance method according to claim 7, wherein before acquiring (S101) the signal intensity parameter corresponding to the at least one attitude of the terminal, the method further comprises:

    acquiring (S3001) a current signal intensity parameter of the terminal in response to determining that the terminal is in the mountain climbing mode; and
outputting (S3002) attitude adjusting prompt information in response to determining that the current signal intensity parameter of the terminal meets a preset condition, wherein the attitude adjusting prompt information is configured to indicate a user to adjust an attitude of the terminal to at least one preset attitude; and
acquiring (S301) the signal intensity parameter corresponding to the at least one attitude of the terminal comprises:
acquiring (S301a) a signal intensity parameter corresponding to the at least one preset attitude of the terminal.

10. The guidance method according to any one of claims 7 to 9, wherein the attitude parameter comprises: a hand-held gesture parameter; and
before outputting (S3002) the attitude adjusting prompt information, the method further comprises:

    acquiring (S3002a) a target service state of the terminal;
determining (S3002b) a hand-held gesture parameter corresponding to the terminal under the target service state; and
determining (S3002c) the at least one preset attitude according to a determined hand-held gesture parameter.

11. The guidance method according to any one of claims 7 to 9, wherein the terminal comprises a plurality of receiving antennas; and
before acquiring the signal intensity parameter corresponding to the at least one attitude of the terminal, the method further comprises:
controlling all the receiving antennas to be in a working state.

12. The guidance method according to any one of claims 7 to 9, further comprising:

    acquiring (S504) first position information of the terminal and second position information of a peripheral base station of the terminal; and
outputting (S505) position prompt information according to the first position information and the second position information, wherein the position prompt information is configured to indicate a user a position of the terminal and a position of the peripheral base station.

13. The guidance method according to claim 12, further comprising:
outputting (S506) path prompt information according to the first position information and the second position information, wherein the path prompt information is configured to indicate the user a path between the terminal and the peripheral base station.

14. An electronic device, comprising:

    a processor (802); and
a memory (804), configured to store processor-executable instructions; wherein
the processor (802) is configured to, when executing the processor-executable instructions, perform the method for detecting a mountain climbing mode according to any one of claims 1 to 6, or, the processor (802) is configured to, when executing the executable instructions, perform the guidance method for the terminal according to any one of claims 7 to 13.

15. A computer readable storage medium for storing computer program instructions, wherein the program instructions, when executed by a processor, perform the method for detecting a mountain climbing mode according to any one of claims 1 to 6, or, the program instructions, when executed by the processor, perform the guidance method for the terminal according to any one of claims 7 to 13.

Acquire an air pressure signal of a terminal within a preset time period ~ S01

Determine a plurality of air pressure values according to the air pressure signal, and calculate air pressure gradients corresponding to the plurality of air pressure values ~ S02

Acquire an inertia signal of the terminal within the preset time period in response to determining that the air pressure gradients meet a preset condition ~ S03

Detect whether the terminal is in a mountain climbing mode according to the plurality of air pressure values and the inertia signal ~ S04

Fig. 1

S02

Determine a plurality of initial air pressure values by performing filtering processing on an air pressure signal ~ S021

Determine a plurality of air pressure values by calculating an average value of a plurality of values within every N seconds in the plurality of initial air pressure values respectively ~ S022

Fig. 2

S03

Acquire an inertia signal in response to that air pressure gradients are greater than or equal to a preset first air pressure gradient threshold and less than or equal to a preset second air pressure gradient threshold ~ S031

Fig. 3

S04

Obtain an air pressure flag bit by calculating an average value of a plurality of air pressure values ⟩ S041

Calculate a difference between the air pressure value corresponding to a latest time stamp in the plurality of air pressure values and the air pressure flag bit ⟩ S042

Detect whether a terminal is in a mountain climbing mode according to an inertia signal in response to determining that the difference is greater than or equal to a preset difference threshold ⟩ S043

Fig. 4

S043

Calculate a first feature value according to a linear acceleration signal and calculate a second feature value according to an angular acceleration signal ⟩ S0431

Input the first feature value and the second feature value into a preset classification model, and determine whether a terminal is in a mountain climbing mode through the classification ⟩ S0432

Fig. 5

S0431

Calculate a first modulus of a linear acceleration signal, obtain a first initial feature value according to the first modulus, calculate a second modulus of an angular acceleration signal, and obtain a second initial feature value according to the second modulus ⟩ S0431a

Obtain a first feature value and a second feature value by processing the first initial feature value and the second initial feature value respectively through a principal component analysis algorithm ⟩ S0431b

Fig. 6

Detect whether a terminal is in a mountain climbing mode ⌐S100

Acquire a signal intensity parameter corresponding to at least one attitude of the terminal in response to determining that the terminal is in the mountain climbing mode ⌐S101

Determine a target attitude of the terminal according to the signal intensity parameter ⌐S102

Output guidance information with respect to an attitude parameter of the target attitude ⌐S103

Fig. 7

Fig. 8

Main lobe

Maximum power direction

Side lobe

Fig. 9

Fig. 10

| Detect whether a terminal is in a mountain climbing mode | S200 |

| Acquire signal intensity parameters corresponding to a plurality of attitudes of the terminal in response to determining that the terminal is in the mountain climbing mode | S2011 |

| Determine a target signal intensity parameter from the signal intensity parameters corresponding to the plurality of attitudes of the terminal | S2021 |

| Determine an attitude corresponding to the target signal intensity parameter as a target attitude | S2022 |

| Output guidance information with respect to an attitude parameter of the target attitude | S203 |

Fig. 11

S2021

| Determine a target signal intensity parameter from signal intensity parameters corresponding to a plurality of attitudes of a terminal | S2021a |

Fig. 12

Detect whether a terminal is in a mountain climbing mode — S300

Acquire a current signal intensity parameter of the terminal in response to determining that the terminal is in the mountain climbing mode — S3001

Output attitude adjusting prompt information in response to determining that the current signal intensity parameter of the terminal meets a preset condition — S3002

Acquire a signal intensity parameter corresponding to at least one preset attitude of the terminal — S301a

Determine a target attitude of the terminal according to the signal intensity parameter — S302

Output guidance information with respect to an attitude parameter of the target attitude — S303

Fig. 13

S3002

Acquire a target service state of a terminal — S3002a

Determine a hand-held gesture parameter corresponding to the terminal under the target service state — S3002b

Determine at least one preset attitude according to the determined hand-held gesture parameter — S3002c

Fig. 14

Detect whether a terminal is in a mountain climbing mode — S500

Acquire a signal intensity parameter corresponding to at least one attitude of the terminal in response to determining that the terminal is in the mountain climbing mode — S501

Determine a target attitude of the terminal according to the signal intensity parameter — S502

Output guidance information with respect to an attitude parameter of the target attitude — S503

Acquire first position information of the terminal and second position information of a peripheral base station of the terminal — S504

Output position prompt information according to the first position information and the second position information — S505

Fig. 15

Detect whether a terminal is in a mountain climbing mode — S500

Acquire a signal intensity parameter corresponding to at least one attitude of the terminal in response to determining that the terminal is in the mountain climbing mode — S501

Determine a target attitude of the terminal according to the signal intensity parameter — S502

Output guidance information with respect to an attitude parameter of the target attitude — S503

Acquire first position information of the terminal and second position information of a peripheral base station of the terminal — S504

Output position prompt information according to the first position information and the second position information — S505

Output path prompt information according to the first position information and the second position information — S506

Fig. 16

S061
Acquire an air pressure signal of a terminal within a preset time period

S0621
Determine a plurality of initial air pressure values by performing filtering processing on the air pressure signal

S0622
Determine a plurality of air pressure values by calculating an average value of a plurality of values within every second in the plurality of initial air pressure values respectively

S0623
Calculate air pressure gradients corresponding to the plurality of air pressure values

S0631
Judge whether the air pressure gradients meet a preset condition

No

Yes

S0632
Acquire an inertia signal of the terminal within a preset time period

S0633
Judge Whether a user holding the terminal is walking according to the inertia signal

No

Yes

S0641
Obtain an air pressure flag bit by calculating an average value of the plurality of air pressure values

S0642
Calculate a difference between the air pressure value corresponding to a latest time stamp in the plurality of air pressure values and the air pressure flag bit

S0643
Judge whether the difference is greater than or equal to a preset difference threshold

No

S061

Yes

S0644
Calculate a first modulus of a linear acceleration signal, obtain a first initial feature value according to the first model value, calculate a second modulus of an angular acceleration signal, and obtain a second initial feature value according to the second model value

S0645
Obtain a first feature value and a second feature value by processing the first initial feature value and the second initial feature value respectively through a principal component analysis algorithm

S0646
Input the first feature value and the second feature value into a preset classification model

S0647
Determine whether the terminal is in a mountain climbing mode through the classification model

No

S061

Yes

S600
Acquire a current signal intensity parameter of the terminal

S6002
Judge whether the signal intensity parameter meets a preset condition

No

S061

Yes

S6003
Acquire a target service state of the terminal, determine a hand-held gesture parameter corresponding to the terminal under the target service state, and determine at least one preset attitude according to the determined hand-held gesture parameter

S600
Control the terminal to enter the mountain climbing mode, and output attitude adjusting prompt information

S601
Acquire a signal intensity parameter corresponding to the terminal under at least one preset attitude

S602
Determine a target attitude of the terminal according to the signal intensity parameter, and output guidance information with respect to an attitude parameter of the target attitude

S603
Acquire second position information of a peripheral base station of the terminal

S604
Output position prompt information and path prompt information according to a position parameter of the terminal and the second position information

Fig. 17

Mountain climbing mode | Exit |

Connected
Please continue to adjust
device angle

Fig. 18

Terminal information
······

Base station  information
······

| Connect | | Navigation |

Fig. 19

90

Apparatus for detecting a mountain
climbing mode

First acquiring module

91

First calculating module

92

Second acquiring module

93

First detecting module

94

Fig. 20

70

Guidance apparatus

Apparatus for detecting a
mountain climbing mode

90

Third acquiring module

71

First determining module

72

First outputting module

73

Fig. 21

804

802    800

Memory

Processing
component

Communication
component

816

806

Power
component

808

Processor

Multimedia
component

820

810

Sensor
component

814

Audio
component

Input/output
interface

812

Fig. 22

Europäisches
Patentamt

European
Patent Office

Office européen
des brevets

**EUROPEAN SEARCH REPORT**

Application Number

EP 23 18 8466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 366 170 A (VIVO COMM TECHNOLOGY CO LTD) 3 July 2020 (2020-07-03) * paragraphs [0034] - [0078]; claims 1-5 * ----- | 1,14,15 | INV. G01C5/06 G01L19/00 |

TECHNICAL FIELDS
SEARCHED      (IPC)

G01C
G01L

The present search report has been drawn up for all claims

| Place of search | Date of completion of the search | Examiner |
|---|---|---|
| The Hague | 9 August 2024 | Tabellion, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 8466

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2024

| Patent document cited in search report | Publication date | Patent family member(s) | Publication date |
|---|---|---|---|
| CN 111366170 A | 03-07-2020 | NONE | |

EPO FORM P0459